# EUROPEAN PATENT SPECIFICATION

(11) **EP 4 252 226 B1**
(45) Date of publication and mention of the grant of the patent: **08.07.2026**
(21) Application number: 21820482.4
(22) Date of filing: 24.11.2021
(51) Int. Cl.: G09F 3/20, G09F 3/02

(54) **SMART LABEL DEVICE WHICH IS APPLICABLE TO A PACKAGING FOR PROVIDING AN INFORMATION REPRESENTATIVE OF THE RESIDUAL PERIOD OF LIFE OF A PERISHABLE PRODUCT INSIDE THE PACKAGING**
INTELLIGENTE ETIKETTENVORRICHTUNG FÜR EINE VERPACKUNG ZUR BEREITSTELLUNG EINER RESTLEBENSDAUERINFORMATION EINES VERDERBLICHEN PRODUKTS INNERHALB DER VERPACKUNG
DISPOSITIF D'ÉTIQUETTE INTELLIGENTE POUVANT ÊTRE APPLIQUÉE SUR UN EMBALLAGE POUR FOURNIR UNE INFORMATION REPRÉSENTATIVE DE LA DURÉE DE VIE RÉSIDUELLE D'UN PRODUIT PÉRISSABLE À L'INTÉRIEUR DE L'EMBALLAGE

(30) Priority: 26.11.2020 IT 202000028595
(43) Date of publication of application: 04.10.2023
(73) Proprietor: TETRA LAVAL HOLDINGS & FINANCE S.A., 1009 Pully (CH)
(72) Inventor: DELL'ERBA, Giorgio, 20124 MILANO (IT); PERINOT, Andrea, 20124 MILANO (IT)
(74) Representative: Tetra Pak Patent Attorneys
(86) International application number: PCT/EP2021/082893
(87) International publication number: WO 2022/112368

(56) References cited:
- EP-A1- 1 319 928
- WO-A1-03/087955
- WO-A1-2015/126306
- US-A1- 2005 248 455

## Description

### . Field of the invention

**.** The present invention refers to the packaging sector for perishable products, in particular, to a smart label device which is applicable to a packaging for providing an information representative of the residual period of life of a perishable product inside the packaging.

### . State of the art

**.** In the field of packaging of perishable products such as, for example, food products, medicines, reagents for medical diagnoses, cosmetic products, it is widespread the use of smart labels, applied to packaging, with electronic circuitry to control the state of deterioration of products contained in the packaging, as well as the use, in such devices, of algorithms based on the control of environmental parameters and/or relating to the state of the perishable product for the prediction of the residual life of the product itself and the communication of such information to the user.

**.** However, these devices are not free from defects.

**.** First of all, the electronic components (microchips) installed on such devices generally show very low characteristics of mechanical bending and resistance to stresses, making such a device, as a whole, of poor mechanical flexibility, like the device disclosed in EP1319928A, that is considered the closest prior art for the present invention.

**.** Furthermore, this device may have even higher manufacturing costs than the perishable product to be monitored.

**.** Furthermore, the assembly costs of such a device (and relative modification of the respective production line) can exceed the advantages of the simple installation of such devices.

**.** In addition, for consumer products such as perishable products that can be monitored by this type of device, it is necessary to avoid inserting components in the package that require special disposal treatments and the integration of electronic circuitry in silicon would immediately make these devices a special waste.

**.** Therefore, the need is strongly felt to have an electronic device, such as a smart label, applicable to a packaging for providing an information representative of the residual period of life of a perishable product inside the packaging that can be easily integrated on the existing packaging, has a low cost and can be easily disposed of at the end of the life cycle of the product.

### . Summary

**.** The purpose of the present invention is to devise and make available a smart label device which is applicable to a packaging for providing an information representative of the residual period of life of a perishable product inside the packaging which allows to at least partially obviate the drawbacks mentioned above with reference to the known art and which, in particular, can be easily integrated into existing packaging, has low costs and is easily disposed of at the end of the life cycle of the product.

**.** This object is achieved by a smart label device according to claim 1.

**.** Advantageous embodiments of this smart label are the subject of the dependent claims.

### . Brief description of the figures

**.** Further characteristics and advantages of the smart label device according to the invention will result from the description given below of preferred embodiment examples, given by way of non-limiting example, with reference to the attached figures, in which:
- Figure 1 illustrates by means of a block diagram a smart label device which is applicable to a packaging for providing an information representative of the residual period of life of a perishable product inside the packaging, according to an embodiment of the present invention;
- Figure 2 illustrates by means of a block diagram a smart label device which is applicable to a packaging for providing an information representative of the residual period of life of a perishable product inside the packaging, according to a further embodiment of the present invention;
- Figure 3 illustrates by means of a block diagram a smart label device which is applicable to a packaging for providing an information representative of the residual period of life of a perishable product inside the packaging, according to a further embodiment of the present invention;
- Figure 4 illustrates by means of a block diagram a smart label device which is applicable to a packaging for providing an information representative of the residual period of life of a perishable product inside the packaging, according to a further embodiment of the present invention;
- Figure 5 illustrates, by means of a circuit diagram, a smart label device which is applicable to a packaging for providing an information representative of the residual period of life of a perishable product inside the packaging, according to a further embodiment of the present invention;
- Figure 6 illustrates a smart label device applicable to a packaging for providing an information representative of the residual period of life of a perishable product inside the packaging, according to a further embodiment of the present invention, and
- Figure 7 illustrates an example of packaging to which the smart label device of figure 6 is applied.

**.** It should be noted that in the figures the same or similar elements will be indicated with the same numerical or alphanumeric references.

### . Description of some preferred embodiments

**.** With reference now to the aforementioned figures, the numerical reference 1 indicates as a whole a smart label device which is applicable to a packaging for providing information representative of the residual period of life of a perishable product inside the packaging, in accordance with the present invention.

**.** The device 1, as will be further detailed in the following according to different embodiments, is applicable to a packaging of a perishable product.

**.** For the purposes of this description, "perishable product" means any product susceptible to degradation as a result of storage conditions, time elapsed, exposure to environmental agents, such as, for example, solid food, liquid food, semi-liquid food, viscous liquids, drugs (e.g. chemotherapy), materials for medical diagnosis (e.g. contrast agents for radiology, radiotracers) or, in general, any perishable product whose life expectancy varies depending on the storage conditions, or for which the time passed from opening the packaging is or is not a critical condition for safety or any perishable product obtainable from the so-called cold chain.

**.** "Packaging" means any container or packaging suitable for containing a perishable product according to any of the examples listed above.

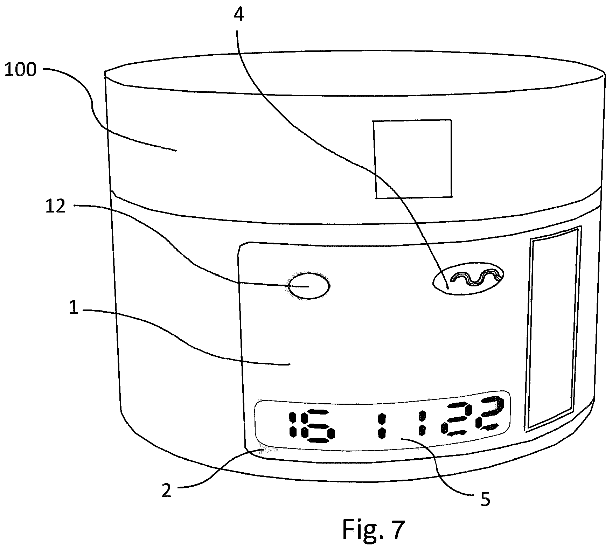

**.** An example of packaging, indicated by the numerical reference 100 in the figures, will be described below with reference to figure 7.

**.** Examples of application of the device 1, according to the type of perishable product to be monitored and consequently also according to the respective type of packaging, will be described below.

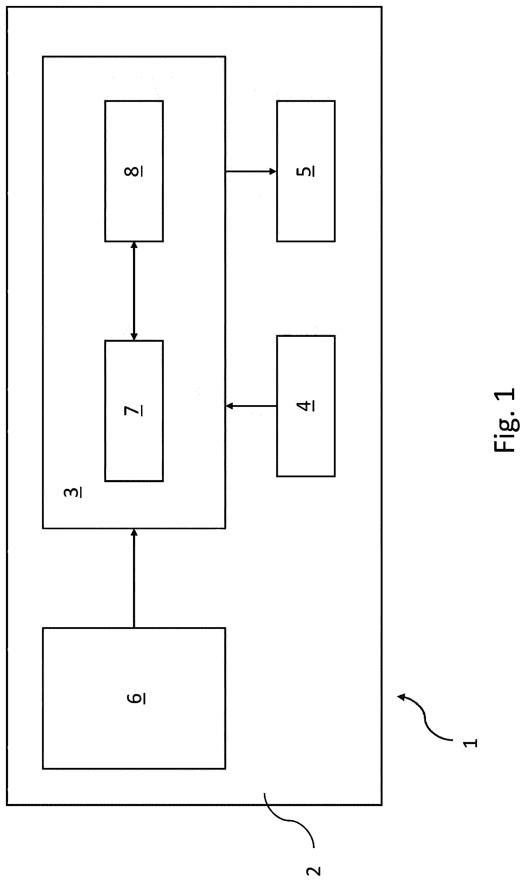

**.** With reference to the diagram of figure 1, the device 1 comprises a flexible support substrate 2 composed of polymers and/or plastics and/or organic materials such as, for example, PET (Poly ethylene terephthalate), PEN (Poly ethylene naphthalate), Polyimide , paper, and/or flexible materials such as, for example, flexible glass.

**.** In further embodiments, the flexible support substrate 2 can be composed of bioplastics, for example Polylactic acid.

**.** It should be noted that the flexibility characteristics of the flexible support substrate 2 are also dependent on its thickness.

**.** The flexible support substrate 2 can have a thickness between 1 micrometer and 200 micrometers, depending on the bending specifications required by the application and depending on the sustainable production cost for the same.

**.** The flexible support substrate 2 has conformation properties, such as the possibility of being wrapped around objects with complex curvatures, such that it can be curved with a radius of curvature of about 3 cm, below 3 cm, below 1 cm, below 1 mm according to application specification.

**.** With reference again to Figure 1, the device 1 further comprises an electronic control unit 3, described in greater detail below, associated with the flexible support substrate 2.

**.** According to an embodiment, also described below, in which the electronic control unit 3 is flexible, the electronic control unit 3 is associated with the flexible support substrate 2 by assembling said electronic control unit 3 to the flexible support substrate 2.

**.** According to an embodiment, the electronic control unit 3 is manufactured with printing techniques comprising, but not limited to, printing techniques in so-called printed electronics technology, for example, inkjet printing, flexographic printing, screen printing, etching printing (gravure), in which the individual components are implemented with the superimposition of plastic materials and with manufacturing through the aforementioned printing techniques.

**.** The device 1 also comprises a sensor unit 4, described in greater detail below, associated with the flexible support substrate 2.

**.** The sensor unit 4 is operatively connected to the electronic control unit 3.

**.** The device 1 further comprises an information signaling unit 5, described in greater detail below, associated with the flexible support substrate 2.

**.** The information signaling unit 5 is operatively connected to the electronic control unit 3.

**.** The device 1 further comprises an electric power supply unit 6 associated with the flexible support substrate 2.

**.** The power supply unit 6 is operatively connected to the electronic control unit 3.

**.** The device 1 further comprises connecting electrical interconnections associated with the flexible support substrate 2.

**.** The electrical connection interconnections are made to electrically connect together the components of the device 1, listed above, in turn associated with the flexible support substrate 2.

**.** The electronic control unit 3, the sensor unit 4, the information signaling unit 5, the power supply unit 6 and the relative electrical interconnections, like the flexible support substrate 2, are flexible, i.e. they have characteristics of thickness (for example up to a lower limit of 10 nanometers) and of manufacturing material that guarantee excellent mechanical flexibility properties.

**.** Therefore, the device 1 advantageously represents a smart label of the "stand-alone" type.

**.** In fact, the device 1 is independent of the need for elements, devices, processors, indicators or sources of energy external to it.

**.** As will be described below, the device 1, as a smart label, can be applied to and removed from a packaging, and thus reused several times with other packaging, up to the end of the life of the device 1.

**.** According to an embodiment, the device 1 is applicable to the external part of a packaging, therefore, together with the sensor unit 4, not in contact with the perishable product inside the packaging.

**.** According to a further embodiment, as an alternative to the previous one, the device 1 can be applied to a packaging in such a way that a main portion of it is outside the packaging while a secondary portion, corresponding to the sensor unit, is placed inside the packaging, in contact or not in contact with the perishable product.

**.** According to a further embodiment, as an alternative to the previous one, the device 1 can be applied to the internal part of a packaging, in contact or not in contact with the perishable product.

**.** Optionally, the device 1 can be advantageously positioned in correspondence with a transparent or semitransparent portion of the packaging itself, in the event that the signaling of the information is of a visual type (e.g. display or OLED).

**.** According to an embodiment, the sensor unit 4, the information signaling unit 5, the power supply unit 6 and the relative electrical interconnections, like the electronic control unit 3, are associated with the flexible support substrate 2 by assembly.

**.** According to an embodiment, like the electronic control unit 3, also the sensor unit 4, the information signaling unit 5, the power supply unit 6 and the related electrical interconnections are manufactured with printing techniques in so-called printed electronics technology, some examples of which have been previously provided, in which the individual components are implemented with the superimposition of plastic materials and with manufacturing through the aforementioned printing techniques.

**.** Referring now again to Figure 1, the electronic control unit 3 comprises a control module 7 and a memory module 8 operatively connected to the control module 7.

**.** The electronic control unit 3 is configured to determine an information representative of the residual period of life of a perishable product inside a packaging with which the device 1 is associated, based on data related to the perishability of the perishable product provided by the sensor unit 4.

**.** For the purposes of this description, "data related to perishability of the perishable product" means one or more physical environmental parameters, a condition of aging or degradation of the perishable product, an environmental condition of conservation, a period of time spent in each particular environmental condition or conservation and/or chemical/physical indicators related to the degradation of the perishable product.

**.** The electronic control unit 3 is configured to associate such data with set combinations of parameters and time patterns, including the rate of change over time (for example, detecting sudden changes in temperature in limited times).

**.** The electronic control unit 3 is configured to determine, on the basis of this aggregate information, an information representative of the state of deterioration of the perishable product and update the information representative of the residual period of life of the perishable product, using set algorithms based on specific models (theoretical or empirical) of deterioration for the perishable product to be monitored according to the data related to the perishability of the perishable product provided by the sensor unit 4.

**.** According to the embodiment of Figure 1, the representation of such theoretical or empirical models can be hard-coded inside the electronic control unit 3.

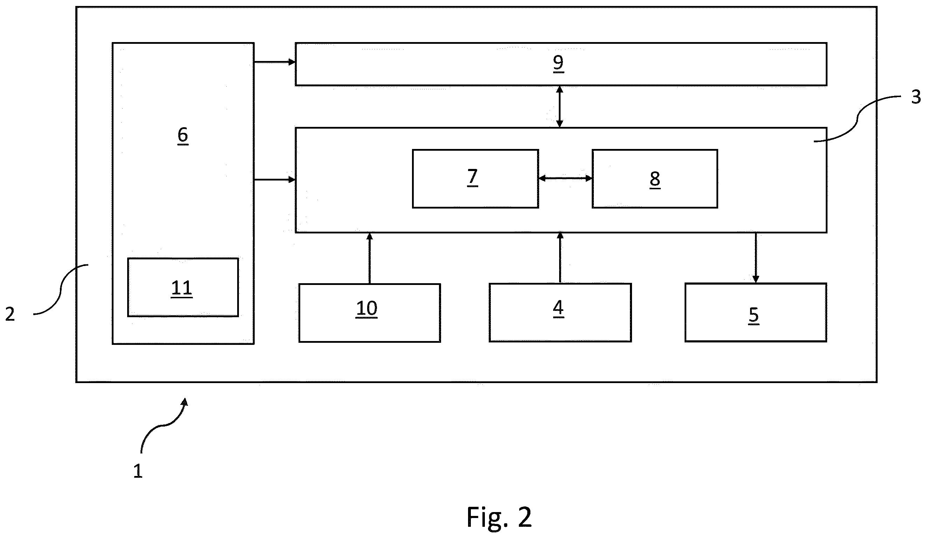

**.** In a further embodiment, alternative to the previous one and shown in Figure 2, the device 1 further comprises one or more memory modules 9 operatively connected to the electronic control unit 3.

**.** According to this embodiment, such one or more memory modules 9 are used to store the representation of such theoretical or empirical models.

**.** According to a further embodiment, alternatively or in combination with the previous one, such one or more memory modules 9 are used to store a time trace of the data correlated to the perishability of the perishable product provided by the sensor unit 4 (history of the state of conservation of the product or history of the environmental conditions to which the product has been subjected) or of additional values of interest, for example relating to actions of interaction with the user (for example, a number of opening events of a container of a cosmetic product) or related to information on the production of the good (for example, a packaging date)

**.** According to a further embodiment, alternatively or in combination with the previous one and shown in Figure 2, the device 1 further comprises look-up tables 10, operatively connected to the electronic control unit 3, through which such theoretical or empirical models can be represented.

**.** The look-up tables 10 can be stored or coded from a hardware point of view (hard-coded) in the device 1 during the manufacturing phase or in a subsequent phase, for example by the manufacturer of the packaging or by the end user, through a dedicated programming device.

**.** In accordance with a further embodiment, alternatives to the previous ones, the aforementioned theoretical or empirical models can be represented through mathematical formulas, subsequently implemented in hardware form through the combination of circuit elements of the electronic control unit 3 configured to perform logical and mathematical operations based on electronic representations of electrical signals detected and provided by the sensor unit 4.

**.** The electronic control unit 3 is also configured to provide the information signaling unit 5 with the information representative of the residual period of life of a perishable product inside a packaging.

**.** In this regard, the electronic control unit 3 is configured to drive the information signaling unit 5.

**.** For the purposes of this description, "information representative of the residual period of life of a perishable product" means information representative of a time date upon which the product will be wasted or information representative of an indication of a state deterioration of the product (for example, depending on whether or not an alarm threshold value corresponding to a minimum residual life is reached).

**.** In the event that the information representative of the residual period of life of a perishable product is the information representative of a time date at which the product will be perished, the electronic control unit 3 is configured to assign the determined residual period of life value to such information.

**.** In the event that the information representative of the residual period of life of a perishable product is the indication of a state of decay of the perishable product, the electronic control unit 3 is configured to determine such information by comparing the determined residual period of life value with an alarm threshold value corresponding to a minimum residual period of life.

**.** It should be noted that the alarm threshold value corresponding to a minimum residual period of life can be stored in the memory module 8 of the electronic control unit 3 or in other memory modules with which the electronic control unit 3 can be equipped or by recording this value intrinsically in the design of the electronic control unit 3, for example by implementing an electronic circuitry configured to process a set alarm threshold value corresponding to a minimum residual period of life.

**.** Alternatively, the alarm threshold value corresponding to a minimum residual period of life can be stored in the memory module 8, or in other memory modules (if present), which can be written or rewritten, subsequent to the manufacture of the device 1.

**.** In further embodiments, the electronic control unit 3 is configured to carry out further reading and/or writing operations in the memory module 8 and/or in further memory modules possibly present.

**.** The electronic control unit 3 therefore contains the information (for example a look-up table) relating to the (theoretical or empirical) model of deterioration of the perishable product which relates the residual period of life and parameters measured/measurable by the sensor unit 4.

**.** Such information can be recorded during manufacturing, for example stored in one or more memory modules 9 or intrinsically recorded in the design of the electronic control unit 3, for example by implementing an electronic circuitry capable of implementing a defined mathematical formula.

**.** Alternatively, such information can be programmed after manufacturing and recorded in any memory module, writable or rewritable.

**.** The electronic control unit 3 is configured to monitor and process at regular intervals (or at the request of the user, in some embodiments), the data detected by the sensor unit 4, as will be described below.

**.** Such measurement can be carried out on a continuous scale or based on one or more predefined thresholds.

**.** Subsequently, in an embodiment, if provided for by the application for which the device 1 is intended, the electronic control unit 3 is configured to record the detected data, for example, inside a memory module, or in a defined electronic state of the electronic circuitry, or by causing a change of state of the electronic circuitry or actuators.

**.** The electronic control unit 3 is configured to perform calculations or logical operations, based on the deterioration model of the perishable product, based on the measurements of the sensor unit 4, so as to update the estimate of the residual period of life of the monitored product.

**.** Such operations are not necessarily based exclusively on current measurements, but can also be based on past values of the data suitably stored in one or more memory modules or in electronic states of the electronic circuitry.

**.** In addition, the operations can also be based on the rate of change of the environmental parameters being measured.

**.** The degradation model of the product can be hard-coded in the electronic control unit 3, in the form of a circuit architecture combined in a suitable sequence to carry out defined mathematical and logical operations on the detected signals.

**.** Alternatively, the deterioration model can be implemented in the form of look-up tables.

**.** At the end of the processing, the electronic control unit 3 obtains an updated value for the residual period of life of the product, or obtains a true/false value indicating the current status of the product (valid or deteriorated), or a value included in a discrete scale, representative of different degrees of deterioration of the product.

**.** According to an embodiment, in combination with any of the previous ones, the electronic control unit 3 is configured to determine an information representative of the interaction (direct or indirect through the device 1) of the user on the packaging, based on respective data provided by the sensor unit 4.

**.** According to different embodiments, the thickness of the electronic control unit 3 can be 10 micrometers, less than 10 micrometers, less than 5 micrometers, less than 2 micrometers, less than 1 micrometer.

**.** It should be noted that the mechanical flexibility properties of the electronic control unit 3, which consequently determine the maximum possible curvature of the device 1, are dependent on the overall thickness of the electronic control unit 3.

**.** In this regard, the minimum radius of curvature for the electronic control unit 3 decreases as its overall thickness decreases.

**.** It is therefore evident that the overall thickness of the electronic control unit 3 is a determining factor for obtaining the advantages of the present invention described above, in particular with reference to the purpose of being able to apply the device 1 in the form of a label on a vast repertoire of packages or packaging characterized by multiple varieties of shapes and surfaces.

**.** In accordance with the present invention, the electronic control unit 3 advantageously has an overall thickness of less than 10 micrometers.

. In solutions belonging to the state of the art, in particular based on the application of microcontroller devices in silicon, the thickness characteristics and the mechanical characteristics of the silicon do not allow to obtain the application advantages obtainable with the electronic control unit 3 in accordance with present invention.

**.** In this regard, it should also be noted that the thickness of the electronic control unit 3 is the fundamental limitation with respect to the thickness of the flexible support substrate in terms of flexibility of the overall device 1.

**.** In fact, since the flexible support substrate 2 has a purely structural support function, it can be chosen of an appropriate thickness with respect to the specifications dictated, for example, by considerations relating to manufacturing, for example also with a thickness of 1 micrometer, thus contributing in a secondary way to the determination of the maximum flexibility of the overall device 1.

**.** From a circuit point of view, the electronic control unit 3 is a flexible integrated circuit comprising electronic elements including, but not limited to, transistors, capacitors, diodes, resistors, memory or data-storage elements.

**.** Such integrated circuit (electronic control unit 3) can contain one or more transistors made in a thin film configuration (Thin Film Transistor - TFT) also made with organic materials (Organic Thin Film Transistors - OTFT).

**.** OTFTs, in turn, can be made using only carbon-based materials including, for example, polymeric semiconductors, semiconductors based on small molecules, semiconductor carbon nanotubes or materials that integrate them.

**.** These materials can be deposited from the liquid phase (from solution) also through the use of printing techniques comprising, but not limited to, printing techniques in printed electronics technology, for example, inkjet printing, flexographic printing, screen printing, etching printing (gravure).

**.** TFTs can also be made using semiconductors based on metal oxides (e.g. Indium Gallium Zinc Oxide).

**.** These materials can be deposited from the liquid phase (from solution) also through the use of printing techniques comprising, but not limited to, printing techniques in printed electronics technology, for example, inkjet printing, flexographic printing, screen printing, etching printing (gravure).

**.** In further embodiments, such integrated circuit (electronic control unit 3) can also comprise one or more organic electrochemical transistors (OECT), one or more transistors with capacitive control based on electrolyte (Electrolyte Gated Organic Field Effect Transistor - EGOFET), one or more vertical charge transport transistors.

**.** As previously mentioned, these components can also be made through the use of printing techniques comprising, but not limited to, printing techniques in printed electronics technology, for example, inkjet printing, flexographic printing, screen printing, etching printing (gravure).

**.** In some embodiments, this integrated circuit (electronic control unit 3) can also comprise one or more diodes.

**.** These components can be made using only carbon-based materials including, for example, polymeric semiconductors, semiconductors based on small molecules, semiconductor carbon nanotubes or materials that integrate the same.

**.** These materials can be deposited from the liquid phase (from solution) also through the use of printing techniques comprising, but not limited to, printing techniques in printed electronics technology, for example, inkjet printing, flexographic printing, screen printing, etching printing (gravure).

**.** Furthermore, in some embodiments, this integrated circuit (electronic control unit 3) can comprise passive electronic components such as resistors, capacitors, inductors and memristors.

**.** These components can be made with conductive materials even only carbon-based as polymeric conductors (eg. PEDOT: PSS) or even metal or oxide-based (e.g. nanoparticles of silver, copper, indium-tin oxide (ITO)).

**.** Such passive electronic components may comprise carbon-based insulating materials (e.g. poly methyl methacrylate) or metal oxides (e.g. aluminum oxide, zirconia oxide, yttrium oxide).

**.** These materials can be deposited from the liquid phase (from solution) also through the use of printing techniques comprising, but not limited to, printing techniques in printed electronics technology, for example, inkjet printing, flexographic printing, screen printing, etching printing (gravure).

**.** Furthermore, in some embodiments, such integrated circuit (electronic control unit 3) can comprise a combination of transistors, diodes and passive components, as described above, such as to create a circuit for analyzing the signal coming from the sensor unit 4.

**.** In further embodiments, such integrated circuit (electronic control unit 3) can contain a combination of transistors, diodes and passive components, as described above, such as to form a circuit that provides the drive signals for actuators.

**.** In some embodiments, the integrated circuit (electronic control unit 3) can comprise a combination of transistors, diodes and passive components, as described above, such as to form a circuit for reading and/or writing memory elements.

**.** In some embodiments, the integrated circuit (electronic control unit 3) may contain architectures for amplifying the operating voltage.

**.** As regards the phase of reading the data coming from the sensor unit 4, by the electronic control unit 3, it should be noted that the integrated circuit is configured to read the electrical signals arriving from the sensor unit 4 in order to recognize an interaction by the user with the packaging with which the device 1 is associated.

**.** In this regard, according to different embodiments, the reading component of the integrated circuit can also comprise at least one amplification circuit, at least one analog-digital converter, at least one recognition circuit for an electric voltage or electric current threshold, at least one operational amplifier, at least one differential amplifier.

**.** These components can also be made through the use of printing techniques including, but not limited to, printing techniques in printed electronics technology, for example, inkjet printing, flexographic printing, screen printing, etching printing (gravure).

**.** With reference now to the sensor unit 4, it is configured to detect "data related to the perishability of the perishable product", already defined previously.

**.** The sensor unit 4 comprises one or more sensors for detecting environmental parameters and aging or deterioration conditions of the perishable product to be monitored.

**.** Examples of environmental parameters can be temperature, humidity, light exposure (possibly limited to some specific wavelengths), exposure to gas, gas generation by the product, exposure to electromagnetic radiation and/or radiation generation by the product.

**.** Examples of aging or deterioration conditions can be gases related to a deterioration of specific products (including ethylene or ammonia), product color changes.

**.** Examples of sensors suitable for detecting environmental parameters are photosensors, heat or temperature sensors, humidity sensors, gas sensors, chemical detectors, radiation detectors.

**.** In one embodiment, the sensor unit 4 can comprise one or more sensors of different types.

**.** In a first example, if the device 1 is intended to be applied to the packaging of food products to be stored in the refrigerator after opening, the sensor unit 4 can comprise a temperature sensor and an electrical or mechanical (flexible) sensor to detect the opening of the packaging.

**.** In a second example, if the device 1 is intended to be applied to the packaging of a medicine, the sensor unit 4 can comprise a UV radiation sensor (for active ingredients sensitive to it), a humidity sensor and a temperature sensor.

**.** Such one or more sensors can be arranged in matrix, segment configurations, or isolated.

**.** According to an embodiment, such one or more sensors, one or more sensors for detecting environmental parameters and aging or deterioration conditions of the perishable product to be monitored can be directly in contact with the product to be monitored (for example installed inside packaging).

**.** According to a further embodiment, as an alternative to the previous one, such one or more sensors for detecting environmental parameters and aging or deterioration conditions of the perishable product to be monitored can be separated from the product to be monitored (for example, installed outside the packaging or installed inside the packaging in such a way as not to be in contact with the product to be monitored).

**.** According to an embodiment, in combination with any of those described above, the sensor unit 4 can be configured to detect data representative of the user's interaction with the packaging to which the device 1 is applied.

**.** In this embodiment, the electronic control unit 3 is configured to determine an information representative of the user's interaction with the packaging to which the device 1 is applied based on the data detected in this regard by the sensor unit 4.

**.** In one embodiment, in combination with the previous one, the electronic control unit 3 is configured to provide the information representative of the residual period of life of the perishable product inside the packaging to which the device 1 is applied, after the determination of the information representative of the user's interaction with the packaging.

**.** By way of example, the residual period of life (expiry date) of a perishable product is provided, by the electronic control unit 3, to the information signaling unit 5 after the activation of a touch sensor present in the sensor unit 4 of device 1.

**.** This embodiment has advantages in terms of energy consumption, relevant for a stand-alone smart label device, especially in the case where the perishable product to be monitored has a long-expected life.

**.** In an embodiment, in combination with any of those described above, the sensor unit 4 comprises one or more sensors for detecting data representative of the user's interaction with the packaging to which the device 1 is applied such as , for example, push buttons, touch sensors, photosensors, heat sensors.

**.** In one embodiment, the sensor unit 4 comprises a single sensor of this type.

**.** In a further embodiment, in combination with or as an alternative to the previous one, the sensor unit 4 can comprise a first sensor and a second sensor (for example, photosensors) positioned on the in-line packaging at a distance of, for example, 1 cm from each other.

**.** This arrangement advantageously allows to detect gestures such as a "sliding" of a finger, through the detection of a sequence comprising the activation of the first sensor and the subsequent activation of the second sensor.

**.** As previously mentioned, the sensor unit 4 is operatively connected, through a respective electrical interconnection, to the electronic control unit 3.

**.** In this embodiment, the sensor unit 4 is configured to receive electrical power directly from the electronic control unit 3.

**.** In an embodiment, alternative to the previous one, the sensor unit 4 is operatively connected, through a respective electrical interconnection, to the electrical power supply unit 6.

**.** It should be noted that the detection by the sensor unit 4 and the subsequent communication with the electronic control unit 3 can take place on the basis of a continuous, discrete, single-threshold or multiple-threshold electrical signal.

**.** Returning in general to the sensor unit 4, it should be noted that it can be achieved through the use of printing techniques comprising, but not limited to, printing techniques in printed electronics technology, for example, inkjet printing, flexographic printing, screen printing, etching printing (gravure).

**.** With reference now to the information signaling unit 5, it is configured to provide the user with the information representative of the residual period of life of the perishable product inside the packaging.

**.** Such information can be provided, by the electronic control unit 3, at regular time intervals.

**.** In one embodiment, the information signaling unit 5 comprises a display unit.

**.** In one embodiment, in combination with the previous one, the information display unit 5 is configured to show the information continuously or only at the request of the user (for example, following the pressing of a respective button of which the device 1 is fitted with).

**.** By way of example, the display unit can comprise light emitting devices (LEDs, OLEDs), electrochromic, thermochromic or electrophoretic devices.

**.** In a further embodiment, alternatively or in combination with the previous one, the information signaling unit 5 can comprise at least one device for triggering a mechanical movement, for example vibrating or mobile membranes, or at least one sound emitter device.

**.** The actuators can be arranged in matrix, segment configurations or isolated.

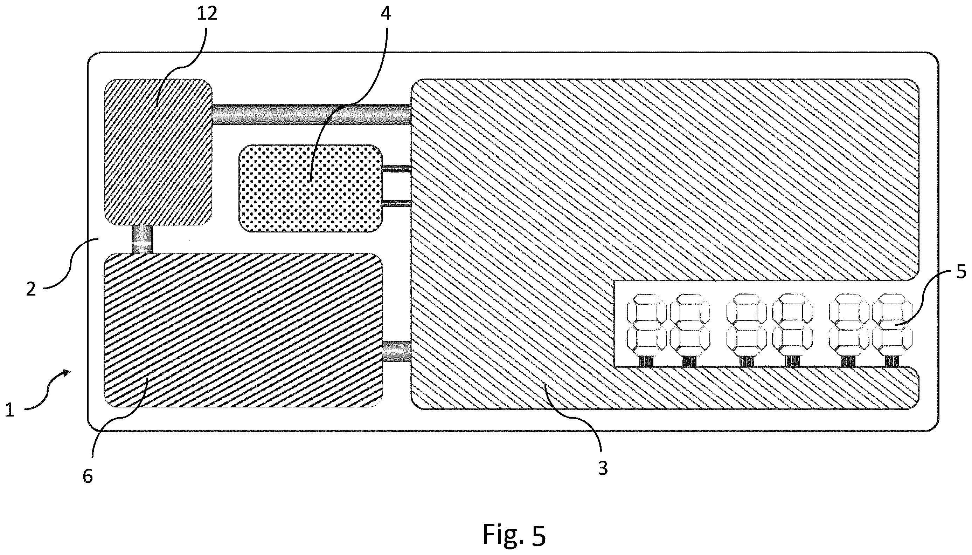

**.** The representation of the information representative of the residual period of life of the perishable product can be carried out through a series of elements arranged according to a set configuration, for example with a segment display (as illustrated for example in Figures 5, 6 and 7), possibly of a suitable shape to represent significant symbols, or through a set arrangement of light-emitting elements.

**.** The information reporting unit 5 is configured to provide the user with the information representative of the residual period of life of the perishable product such as the time date (day/month/year or month/year) of expiry or an indication of one state of decay of the perishable product, the latter preferably expressed through a defined scale which can include, for example, the states "valid", "perished", "close to perish", "partially perished".

**.** This information is reported through the information signaling unit 5 using a suitable signal or combination of signals.

**.** For example, such signals may include visual representations (activation of displays and/or colored light indicators), auditory or mechanical representations (for example a vibration).

**.** The signaling can be carried out continuously (for example with a constantly lit indicator light) or carried out repeatedly at constant intervals, or is carried out upon completion of set events (light detection, which can be associated with the act of opening the refrigerator, or vibration detection, which can be associated with the act of grasping the product by the user), or at the user's request (for example after pressing a dedicated button).

**.** The information can be represented through a series of suitably arranged elements, for example with a segment display, possibly of a suitable shape to represent significant symbols, or through a suitable arrangement of light-emitting elements.

**.** The signaling status of these elements can be updated at each update event of the residual period of life of the product, or when significant thresholds are reached, as defined by the deterioration model (for example to represent a progressive bar indicating the approach to the expiration date), or it can be updated at regular time intervals (for example to generate a flashing effect).

**.** It should be noted that also the information signaling unit 5 can be realized through the use of printing techniques comprising, but not limited to, printing techniques in printed electronics technology, for example, inkjet printing, flexographic printing, screen printing, etching printing (gravure).

**.** With reference now to the electric power supply unit 6, in one embodiment, this unit can comprise energy accumulators, such as for example one or more primary or secondary batteries or supercapacitors.

**.** In a further embodiment, shown in Figure 2, the power supply unit 6 can comprise at least one further energy-harvester 11 such as, for example, a photovoltaic cell, a thermoelectric generator, a triboelectric generator.

**.** In a further embodiment, the power supply unit 6 can also be a combination of two or more of the components provided in the previous embodiments.

**.** In a further embodiment, in combination with any of those described above, the power supply unit 6 comprises a control circuitry for the dynamics of electric current supply: for example, electric voltage and/or discharge regulators downstream of the power supply unit 6.

**.** In a further embodiment, in combination with any of those described above, the power supply unit 6 can comprise a recharge control circuitry of the power supply unit 6, configured to manage, for example, the recharging of an electrical power supply unit consisting of a rechargeable battery and one or more energy harvesters.

**.** According to a further embodiment, in combination with any of those described above, the power supply unit 6 can further comprise an antenna for collecting energy from electromagnetic radiation, a rectifier (for example, composed with one or more diodes printed or with transistors, as described above, in architecture, for example, with transdiode) and a capacitor.

**.** It should be noted that also the power supply unit 6 can be realized through the use of printing techniques comprising, but not limited to, printing techniques in printed electronics technology, for example, inkjet printing, flexographic printing, screen printing, etching printing (gravure).

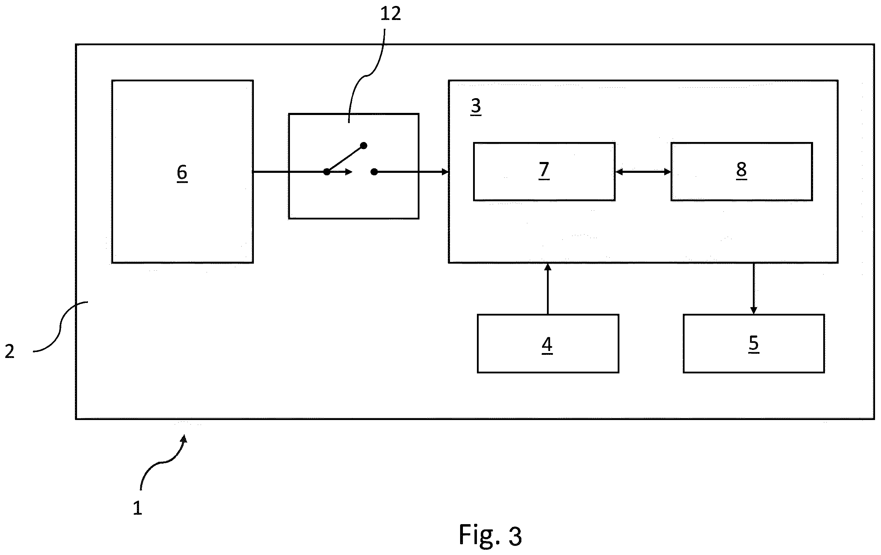

**.** According to an embodiment, in combination with any of those described above, schematically shown in Figures 3, 4, 5, 6 and 7, the device 1 can comprise a command 12 for electrically activating the device 1, the actuation of which, by the user, allows the electronic control unit 3 to be electrically connected to the power supply unit 6.

**.** This activation command 12 can be, for example, a pressure switch, an antifuse or a conductive line which, once interrupted, establishes the electrical connection between the power supply unit 6 and the other components of the device 1, or a removable strip which, once removed, establishes electrical contact between the power supply unit 6 and the further components of the device 1.

**.** It should be noted that the activation command 12 allows the device 1 to be activated when the device 1 is used for the first time.

**.** In one embodiment, the activation command 12 is flexible, i.e. it has characteristics of thickness (for example up to a lower limit of 20 nanometers) and of manufacturing material which guarantee excellent mechanical flexibility properties.

**.** The activation command 12 can be achieved through the use of printing techniques comprising, but not limited to, printing techniques in printed electronics technology, for example, inkjet printing, flexographic printing, screen printing, etching printing (gravure).

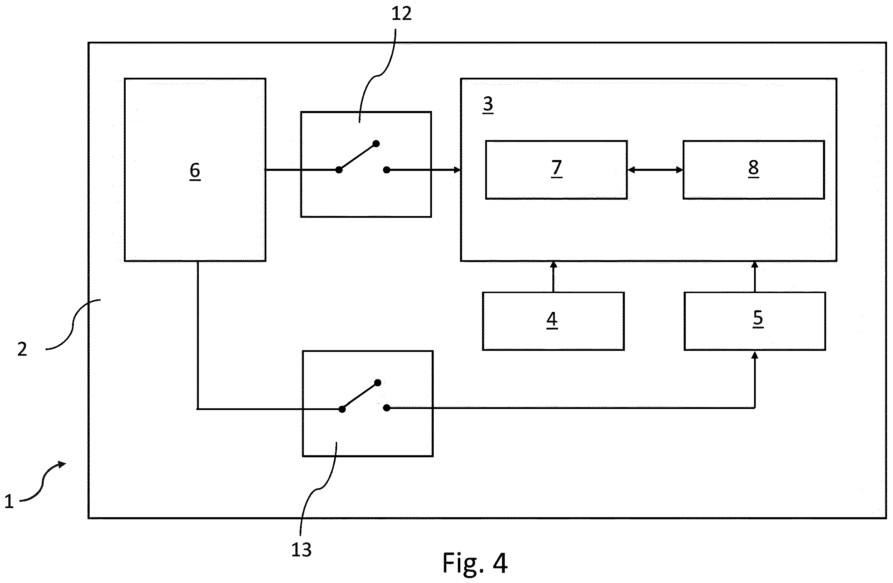

**.** In accordance with an embodiment, in combination with any of those described above and shown in Figure 4, the device 1 further comprises a command 13 for enabling the information signaling unit 5, the actuation of which, by the user, allows the information signaling unit 5 to be electrically connected to the power supply unit 6.

**.** Such enabling command 13 can be, for example, a push button or switch which, once operated, establishes the electrical connection between the power supply unit 6 and the information signaling unit 5.

**.** It should be noted that the enabling command 13 allows the enabling of the information signaling unit 5, by the user, at any time, upon request.

**.** In one embodiment, the enabling control 13 is flexible, i.e. it has characteristics of thickness (for example up to a lower limit of 20 nanometers) and of manufacturing material which guarantee excellent mechanical flexibility properties.

**.** The enabling command 13 can be achieved through the use of printing techniques comprising, but not limited to, printing techniques in printed electronics technology, for example, inkjet printing, flexographic printing, screen printing, etching printing (gravure).

**.** Returning in general to the smart label device 1, it is pointed out that it, or part of it, according to an embodiment, in combination with any of those described above, can be combined with an overlapping and covered coating layer with additional specific graphics, in order to clarify the meaning of the information reported by the information signaling unit 5.

**.** Such coating layer covered with specific additional graphics can be produced directly on the device 1 or produced separately and then applied with a suitable method.

**.** Furthermore, according to a further embodiment, in combination with any of those described above, the device 1 as a whole, or part of it, can be completed with an encapsulating layer suitable for limiting or preventing gas or vapors permeation, such as water vapor and oxygen.

**.** Such encapsulating layer can be deposited through coating or printing techniques, or alternatively made separately and laminated on the final device 1.

**.** Such encapsulating layer can be composed, for example, of polymeric materials with a low permeation coefficient for substances of interest, or of particles or "platelets" or "nanorods" of metal oxides, or of metal layers, or of layers of metal oxides, or from particles or layers of silicates or from a combination of one or more of the aforesaid materials.

**.** In one embodiment, the encapsulating layer may be designed to allow or incentivize the permeation of specific gases or chemical substances, e.g. chemicals related to the deterioration of the perishable product (e.g., the detection of ethylene as a deterioration indicator of fruit).

**.** In a further embodiment, the encapsulating layer can also be designed with geometries such as to allow the permeation of specific gases or chemical substances only in certain areas of the device 1, for example in correspondence with a suitable sensor, while the same encapsulating layer prevents advantageously the permeation of the same gases or chemical substances in other areas (for example in correspondence with the electronic control unit 3).

**.** This feature can be implemented, for example, by appropriately arranging materials with different permeation characteristics in the different areas of interest through the use of printing techniques comprising, but not limited to, printing techniques in printed electronics technology, for example, inkjet printing, flexographic printing, screen printing, etching printing (gravure).

**.** In one embodiment, in combination with any of those described above, the device 1, in particular the rear surface of the flexible support substrate 2, as a whole or in part, depending on the specific application, is coated with an adhesive layer to allow the adhesion to the intended surface(s) of the packaging.

**.** This adhesive layer can be made with the use of a glue or adhesive material but also through, for example, the following principles or combinations of them: electrostatic adhesion, chemical adhesion, adhesion with "polymer nano brushes".

**.** The smart label device 1 object of the present invention can be made with electronic and mechanical technology different from the conventional one, for example belonging to the field of printed electronics and/or organic.

**.** The electronic control unit 3, the sensor unit 4 and the information signaling unit 5 are obtained, for example, with printing techniques in printed electronics technology, some of which examples have been previously provided, derived from graphic printing technologies and through the use of materials with excellent mechanical flexibility properties (e.g. plastic organic materials).

**.** These technologies make it possible to realize the functional part of the device 1 in a thin and superficial layer on the chosen flexible support substrate 2, depositing the active materials constituting the components through printing methods (for example, inkjet) in the form of liquid inks, which are subsequently dried by removing the liquid part needed only for processing.

**.** The electronic components are made with the above procedures through the subsequent deposition, in vertical and/or horizontal geometric structures, of materials of the following type (but not exclusively): conductive polymers (e.g. PEDOT: PSS (poly (3,4-ethylenedioxythiophene) polystyrene sulfonate)) , conductive metal inks (e.g. inks containing Ag or Cu nanoparticles, metal-organic complexes, metal "nanowires" or "nanorods"), semiconductors and/or conductors based on carbon derivatives (e.g. carbon nanotubes, graphene), semiconductor metal oxides, conductors or insulators (e.g. Indium-Gallium-Zinc-Oxide, alumina, yttria), semiconductor polymers (e.g. P3HT), small organic molecules (e.g. PCBM ([6,6] -phenyl-C 61 -butyric methyl ester), Pentacene, F4-TCNQ (2,3,5,6-Tetrafluorine-7,7,8,8-tetracyanoquinodimethane)), dielectric polymers (e.g. Polymethylmethacrylate (PMMA), Polystyrene).

**.** These structures form electronic components suitable for carrying out the functions specified for a smart label such as device 1, including, but not limited to, transistors, diodes, resistors, capacitors, sensors, OLEDs, displays; together with the electrical interconnections necessary for the interconnection of the aforementioned components.

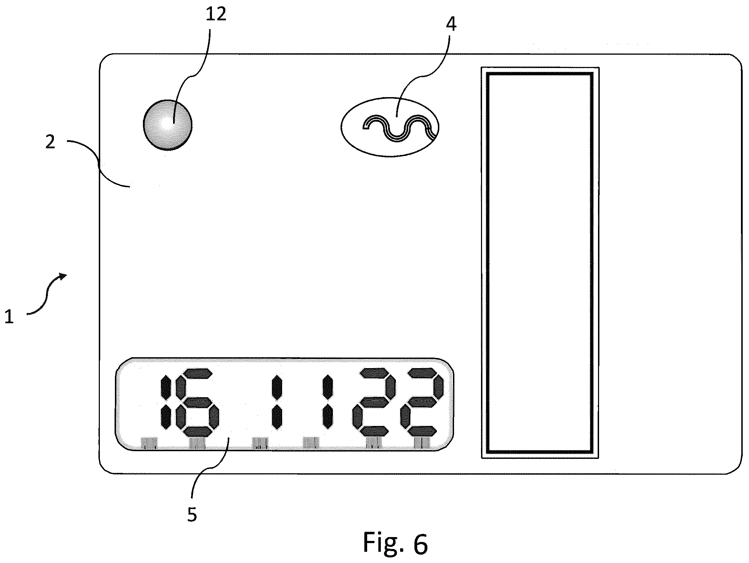

**.** With reference now to Figures 6 and 7, an example of operation of a smart label device 1 which can be applied to a packaging 100 for providing information representative of the residual period of life of a perishable product inside the packaging 100 is now described, according to an embodiment of the invention.

**.** The device 1 is applied to a packaging 100, for example a container of a cosmetic product (Figure 8).

**.** Upon first use, the user presses an activation component 12 to electrically activate the device 1.

**.** A sensor unit 4 detects environmental parameters and provides the electronic control unit 3 with data related to the perishability of the product.

**.** The electronic control unit 3 determines an information representative of the residual period of life of the perishable product inside the packaging 100, based on the data related to the perishability of the perishable product provided by the sensor unit 4.

**.** The electronic control unit 3 supplies the determined information representative of the residual period of life of a perishable product inside the packaging 100 to the information signaling unit 5 which will display the information (16.11.22) at the user.

**.** The smart label device 1 according to the present invention has various applications.

**.** For example, in the event that the perishable product is of a cosmetic and personal care type, according to the European directive, the life time of the product is typically indicated in the form of Period-After-Opening (PAO) which replaces the indication of the expiration date for those products that have an expiration date greater than 30 months when the product is closed and properly stored.

**.** Unfortunately, this method of indication is unfamiliar to a large part of end users, for whom an indication such as "expiration date" is more familiar. Sometimes, this condition (the absence of an explicit indication in the form of expiration date) promotes the misuse of the products on here the PAO indication mode is present, also leading to the use of products for a period greater than the indicated life time.

**.** In this context, a PAO smart label such as the one object of the present invention can be applied to products of this kind and implemented by including a package opening sensor (for example a simple mechanical sensor, or a light sensor to detect the opening of an opaque packaging, or a gas/humidity sensor to detect the first exposure of the product to the atmosphere after opening).

**.** The opening signal generated by such sensor is then detected by the electronic control unit 3, which at that point displays an expiry date on the information signaling unit 5, a function of the opening date and the PAO indicated by the manufacturer.

**.** A different implementation can replace the indication in the form of expiration date with luminous indicators, for example a yellow indicator that activates when the expiration date approaches (for example in the previous month) and a red indicator that indicates that the period of validity of the product has completely elapsed.

**.** In a second example, the smart label according to the present invention can be applied on the container of perishable food products.

**.** In the example case of milk, the food deterioration process over time is dependent on the temperature conditions, in particular the deterioration is accelerated in the case of storage for prolonged times at room temperature (for example in the case of milk carton left in the outside the fridge after opening).

**.** In this example, the smart label is provided with a temperature sensor that constantly monitors the storage condition of the product, also considering the duration of such condition.

**.** In the device 1, the electronic control unit 3 is configured to record this information and compare it with a preset deterioration model, updating the indication on the deterioration of the product (or on the residual period of life) to be provided to the consumer.

**.** In one embodiment, the sensor unit 4 of the device 1 can comprise a light sensor, which is known to be a further factor in accelerating the deterioration.

**.** In a further example of application, in which the perishable product is a medicinal product, it is shown that the deterioration of such a product is influenced by the temperature, humidity and lighting conditions of the storage environment.

**.** In the specific case of a medicinal product, the correct identification of the state of deterioration of these substances assumes great importance, in view of the implications in terms of compliance and efficacy of the medical treatments to which the specific patient is subjected.

**.** In this case, the smart label device 1, whose sensor unit 4, integrates temperature, humidity and/or light sensors is able to monitor the relevant conditions for the deterioration of the medicinal product, evaluating its status in accordance with a deterioration model defined by the drug manufacturer, providing the patient/user with information relating to the validity of the drug or active ingredient in question, avoiding loss of efficacy of the medical treatment in progress.

**.** Still in the medical field, the smart label device 1 can be applied to the case of the storage of contrast agents for medical diagnostics, since often the stability of the medium is influenced by temperature, humidity and exposure to light.

**.** According to a further example, the smart label device 1 is applicable on the packaging of fresh foods (for example, meat or fish) in supermarkets and food distribution chains.

**.** Sometimes, some of the fresh food products packaged by these agents approach the expiration date in significant quantities, risking to remain unsold and consequently not consumed.

**.** Often, discounting strategies allow to mitigate this risk, however these strategies are necessarily independent from the detection of the product status, and must be based on manual operation (for example through the application of discount labels on the package by an operator).

**.** In these cases, not only is a smart label device advantageous, capable of automatically updating the discounts to be applied when the expiry date of the product is approached (in such a way as not to require operational intervention), but the integration of the possibility of automatically updating the expected period of life of the product also on the basis of appropriate measurements is also favorable.

**.** In the case of products such as meat and fish, an example may be the measurement of gases or chemical substances that are a consequence of the deterioration of the food in question.

**.** As can be seen, the object of the present invention is fully achieved.

**.** The smart label device 1 according to the present invention does not require the use or presence of external components or devices for the implementation of its functions (for example: mobile phones or external devices for data processing and display, antennas for communication RF or for the supply of energy necessary for activation).

**.** This functionality makes this smart label suitable also for products and packaging that are portable, i.e. they are designed for functional use in conditions of user mobility, not requiring the use of fixed energy sources and/or refills of energy sources such as batteries.

**.** In this context, the smart label can be defined as "stand-alone".

**.** Furthermore, a "stand-alone" device is advantageous as it does not require dedicated external readers to operate and/or to report information to the user.

**.** The intelligent label device 1 allows, through the information signaling unit, to provide information representative of the residual period of life of a perishable.

**.** Said information signaling unit can be, for example, a display unit of the expiry date, or it can comprise simple luminous indicators used to provide appropriate information related to the expiry date of the product or its conservation status according to a coding (for example based on the indicator color).

**.** The indications should not be understood as limited to information on the state of deterioration or the expected residual period of life of the product, but may also include other information that is correlated/dependent on the estimated useful life of the product.

**.** For example, in a context within a store, this type of information may include notifications to the customer of the application of additional discounts on the price of the asset.

**.** For the market of these devices, there may be needs and limitations, even stringent ones, of an economic nature related to the costs for adding the monitoring functions, conservation and updating of the life time described above with the addition of electronic based, for example, on conventional silicon microchips.

**.** For example, in some cases, the cost of adding this functionality can make up the majority of the cost of manufacturing the final product and / or its packaging.

**.** In other cases, the redesign and/or restructuring of the production and supply chain associated with the addition of these functionalities can make an operation suitable for their implementation economically unjustified.

**.** The smart label device according to the present invention is designed and implemented in such a way as to overcome these limitations, and can be applied to existing designs without requiring changes to the production process and/or redesign of the product/packaging.

**.** In one implementation, this smart label can be added to existing packaging in the form of an "add-on" or "retrofit", in order to add the above functions to the product without any further modification to the label application operation.

**.** In a further implementation, this smart label can be reusable and/or detachable from one product and reapplicable on a second product, promoting waste reduction and optimizing resource use.

**.** Since the components of the device according to the present invention are present only in a thin layer (in some embodiments, less than a micrometer thick) and made with intrinsically flexible materials (for example plastics), the resulting device 1 is a smart label that has excellent mechanical properties of flexibility that allow, for example, the application on curved surfaces without structural damage.

**.** In addition, manufacturing and assembly techniques can be based on rotary processes, facilitating large-volume production.

**.** Furthermore, the label integration techniques are very similar to the processes already used for the application of graphic labels on existing medical devices, more generally in current packaging, simplifying the introduction of device 1 as a smart label in the existing production lines.

**.** This combined set of advantages, not only facilitates the technical integration of the device 1 in current medical devices, more generally in current packaging, with existing processes, but also simplifies the series of economic and market considerations related to the costs of introducing such labels in current products, as it enables a low-cost, high-volume type of production process.

**.** In addition, unlike electronic devices based on conventional technology (for example on silicon) which constitute special waste that requires specific and expensive treatment for disposal, the type of technology proposed for device 1 as a smart label, thanks also to the category of functional materials used, can enable strong simplifications in the management of the end-of-life cycle of the final product.

**.** In fact, a large set of organic materials (for example various families of plastics with functional characteristics of the electronic type, some already widely used for applications requiring particular approvals) do not constitute special waste

**.** In addition, the amount of materials required for implementation is minimal, sometimes less than 1% of the total volume of the label including the flexible backing substrate.

**.** In one embodiment, the functional part of the device 1 (smart label), composed of electronic circuitry, sensors, display, can be made in a thin and superficial layer which constitutes a proportion of less than 5% of the total quantity of overall material of the device 1.

**.** In this example, 95% of the constituent material of the device 1 could be composed of a substrate in polymeric material that can be inserted in common recycling cycles such as, but not limited to, polycarbonate, polyethylene, polyethylene terephthalate, polyethylene naphthalate, polystyrene, paper, or combinations of them.

**.** This feature allows the label to be disposed of in conventional waste management processes, without requiring expensive disassembly and/or special treatment processes.

**.** In other examples, the smart label could be realized with the exclusive use of materials based on carbon or organic polymers, potentially insertable in less complex disposal cycles than the materials commonly used in conventional electronics.

**.** Further embodiments may consist of smart labels in which specific functional parts are detachable from the label, so as to facilitate its disposal and/or reduce the amount of material that requires specific treatment.

**.** Removable components from the smart label can be, for example, the power supply unit 6 (e.g. the battery, the energy harvester), the information signaling unit 5 (e.g. display), the electronic control unit 3 or the functional part as a whole.

**.** In the device according to the present invention, the problems of mechanical flexibility, cost of the smart label, the need for solutions to simplify the disposal of the packaging, are faced through the use of "printed electronics" technology, based on printing techniques and materials organic and/or polymeric.

**.** This electronic technology is implemented in a thin film configuration, according to which the aforementioned materials constitute a minority part of the final product, which is mostly constituted by the flexible support substrate material, which can be recyclable.

## Claims

1. A smart label device (1) which is applicable to a packaging (100) for providing an information representative of the residual period of life of a perishable product inside the packaging (100), comprising:
- a flexible support substrate (2) composed of polymers and/or plastics and/or organic materials and/or flexible materials;
- an electronic control unit (3) associated with the flexible support substrate (2),
- a sensor unit (4) associated with the flexible support substrate (2), the sensor unit (4) being operatively connected to the electronic control unit (3), the sensor unit (4) detecting data related to the perishability of the perishable product inside the packaging (100) with which the device (1) is associated;
- an information signaling unit (5) associated with the flexible support substrate (2), the information signaling unit (5) being operatively connected to the electronic control unit (3),
- a power supply unit (6) associated with the flexible support substrate (2), the power supply unit (6) being operatively connected to the electronic control unit (3), the electronic control unit (3)
- determining an information representative of the residual period of life of a perishable product inside a packaging (100) with which the device (1) is associated, based on data related to the perishability of the perishable product provided by the sensor unit (4);
- and providing the information signaling unit (5) with the determined information representative of the residual period of life of a perishable product (100), **characterized in that** the electronic control unit (3) being a flexible integrated circuit comprising electronic elements comprising organic semiconductor material deposited on the flexible support substrate (2) from liquid phase through the use of printing techniques or comprising semiconductor material based on metal oxides.

2. A device (1) according to claim 1, wherein the electronic control unit (3) is configured to:
- associate the data detected by the sensor unit (4) with set combinations of parameters and time patterns;
- determine, according to this aggregated information, an information representative of the state of deterioration of the perishable product and update the information representative of the residual period of life of the perishable product, using set algorithms based on specific models of deterioration for the perishable product to be monitored according to the data related to the perishability of the perishable product provided by the sensor unit (4).

3. A device (1) according to any one of the preceding claims 1 or 2, wherein the information representative of the residual period of life of a perishable product is an information representative of a time date at which the product will have deteriorated, the electronic control unit (3) being configured to assign the determined residual period of life value to such information.

4. A device (1) according to any one of the preceding claims 1 or 2, wherein the information representative of the residual period of life of a perishable product is an indication of a state of deterioration of the perishable product, the electronic control unit (3) being configured to determine such information by comparing the determined residual period of life with an alarm threshold value corresponding to a minimum residual period of life.

5. A device (1) according to any one of the preceding claims, wherein the electronic control unit (3) is further configured to determine an information representative of the interaction of the user on the packaging, based on respective data provided by the sensor unit (4) representative of the interaction of the user with the packaging to which the device (1) is applied.

6. A device (1) according to any one of the preceding claims, wherein the information signaling unit (5) is configured to provide the user with the information representative of the residual period of life of the perishable product inside the packaging (100).

7. A device (1) according to any one of the preceding claims, wherein the information signaling unit (5) comprises a display unit.

8. A device (1) according to any one of the preceding claims, wherein the information signaling unit (5) comprises at least one device for triggering a mechanical movement or at least one sound emitter device.

9. A device (1) according to any one of claims 6 to 8, wherein the signaling of the information representative of the residual period of life of the perishable product inside the packaging (100) is carried out continuously or repeatedly at constant intervals or is carried out upon completion of set events or at the user's request.

10. A device (1) according to any one of the preceding claims, comprising a command (12) for electrically activating the device (1), the actuation of which, by the user, allows the electronic control unit (3) to be electrically connected to the power supply unit (6).

11. A device (1) according to any one of the preceding claims, further comprising a command (13) for enabling the information signaling unit (5), the actuation of which, by the user, allows the information signaling unit (5) to be electrically connected to the power supply unit (6).

12. A device (1) according to any one of the preceding claims, wherein the sensor unit (4), the information signaling unit (5), the power supply unit (6), and electric interconnections thereof are as flexible as the flexible support substrate (2) and the electronic control unit (3).

13. A device (1) according to any one of the preceding claims 10 to 12, wherein the activation command (12) and the enabling command (13) are flexible.

14. A device (1) according to any one of the preceding claims, wherein such a device (1) is completed with an encapsulating layer adapted to limit or prevent the permeation of specific vapors or gases.

15. A device (1) according to any one of the dependent claims, wherein a rear surface of the flexible support substrate (2), as a whole or in part, is coated with an adhesive layer to allow the adhesion to the intended surface(s) of the packaging (100).

## Patentansprüche

1. Intelligente Etikettenvorrichtung (1), die auf eine Verpackung (100) zum Bereitstellen von Informationen anwendbar ist, die die Restlebensdauer eines verderblichen Produkts innerhalb der Verpackung (100) repräsentieren, die Folgendes umfasst:
- ein flexibles Trägersubstrat (2) aus Polymeren und/oder Kunststoffen und/oder organischen Materialien und/oder flexiblen Materialien;
- eine elektronische Steuereinheit (3), die dem flexiblen Trägersubstrat (2) zugeordnet ist,
- eine Sensoreinheit (4), die dem flexiblen Trägersubstrat (2) zugeordnet ist, wobei die Sensoreinheit (4) mit der elektronischen Steuereinheit (3) wirkverbunden ist, wobei die Sensoreinheit (4) Daten detektiert, die sich auf die Verderblichkeit des verderblichen Produkts innerhalb der Verpackung (100) beziehen, der die Vorrichtung (1) zugeordnet ist;
- eine Informationssignalisierungseinheit (5), die dem flexiblen Trägersubstrat (2) zugeordnet ist, wobei die Informationssignalisierungseinheit (5) mit der elektronischen Steuereinheit (3) wirkverbunden ist,
- eine Leistungsversorgungseinheit (6), die dem flexiblen Trägersubstrat (2) zugeordnet ist, wobei die Leistungsversorgungseinheit (6) mit der elektronischen Steuereinheit (3) wirkverbunden ist,
wobei die elektronische Steuereinheit (3)
- Informationen bestimmt, die die Restlebensdauer eines verderblichen Produkts innerhalb einer Verpackung (100) repräsentiert, die der Vorrichtung (1), basierend auf Daten, die sich auf die Verderblichkeit des verderblichen Produkts beziehen, die von der Sensoreinheit (4) bereitgestellt werden, zugeordnet ist;
- und die Informationssignalisierungseinheit (5) mit den bestimmten Information bereitstellt, die die Restlebensdauer eines verderblichen Produkts (100) repräsentieren, **dadurch gekennzeichnet, dass** die elektronische Steuereinheit (3) eine flexible integrierte Schaltung ist, die elektronische Elemente umfasst, die organisches Halbleitermaterial umfassen, das auf dem flexiblen Trägersubstrat (2) durch die Verwendung von Drucktechniken aus flüssiger Phase abgeschieden ist oder Halbleitermaterial basierend auf Metalloxiden umfasst.

2. Vorrichtung (1) nach Anspruch 1, wobei die elektronische Steuereinheit (3) dazu ausgelegt ist:
- die von der Sensoreinheit (4) detektierten Daten zu festgelegten Kombinationen von Parametern und Zeitmustern zuzuordnen;
- gemäß diesen aggregierten Informationen, Informationen zu bestimmen, die den Zustand der Verschlechterung des verderblichen Produkts repräsentieren, und die Informationen, die die Restlebensdauer des verderblichen Produkts repräsentieren, unter Verwendung von festgelegten Algorithmen, die auf spezifischen Modellen der Verschlechterung für das zu überwachende verderbliche Produkt basieren, gemäß den Daten zu aktualisieren, die sich auf die Verderblichkeit des verderblichen Produkts beziehen, die von der Sensoreinheit (4) bereitgestellt werden.

3. Vorrichtung (1) nach einem der vorhergehenden Ansprüche 1 oder 2, wobei die Informationen, die die Restlebensdauer eines verderblichen Produkts repräsentieren, Informationen sind, die ein Zeitdatum repräsentieren, zu dem sich das Produkt verschlechtert haben wird, wobei die elektronische Steuereinheit (3) dazu ausgelegt ist, den bestimmten Restlebensdauerwert solchen Informationen zuzuweisen.

4. Vorrichtung (1) nach einem der vorhergehenden Ansprüche 1 oder 2, wobei die Informationen, die die Restlebensdauer eines verderblichen Produkts repräsentieren, eine Angabe eines Verschlechterungszustands des verderblichen Produkts sind, wobei die elektronische Steuereinheit (3) dazu ausgelegt ist, solche Informationen durch Vergleichen der bestimmten Restlebensdauer mit einem Alarmschwellenwert, der einer minimalen Restlebensdauer entspricht, zu bestimmen.

5. Vorrichtung (1) nach einem der vorhergehenden Ansprüche, wobei die elektronische Steuereinheit (3) ferner dazu ausgelegt ist, basierend auf jeweiligen durch die Sensoreinheit (4) bereitgestellten Daten, die für die Interaktion des Benutzers mit der Verpackung, auf die die Vorrichtung (1) angewendet wird, repräsentativ sind, Informationen zu bestimmen, die die Interaktion des Benutzers mit der Verpackung repräsentieren.

6. Vorrichtung (1) nach einem der vorhergehenden Ansprüche, wobei die Informationssignalisierungseinheit (5) dazu ausgelegt ist, dem Benutzer die Informationen bereitzustellen, die die Restlebensdauer des verderblichen Produkts innerhalb der Verpackung (100) repräsentieren.

7. Vorrichtung (1) nach einem der vorhergehenden Ansprüche, wobei die Informationssignalisierungseinheit (5) eine Anzeigeeinheit umfasst.

8. Vorrichtung (1) nach einem der vorhergehenden Ansprüche, wobei die Informationssignalisierungseinheit (5) mindestens eine Vorrichtung zum Auslösen einer mechanischen Bewegung oder mindestens eine Schallemittervorrichtung umfasst.

9. Vorrichtung (1) nach einem der Ansprüche 6 bis 8, wobei die Signalisierung der Informationen, die die Restlebensdauer des verderblichen Produkts innerhalb der Verpackung (100) repräsentieren, kontinuierlich oder wiederholt zu konstanten Intervallen durchgeführt wird oder nach Abschluss von festgelegten Ereignissen oder auf Anforderung des Benutzers durchgeführt wird.

10. Vorrichtung (1) nach einem der vorhergehenden Ansprüche, die einen Befehl (12) zum elektrischen Aktivieren der Vorrichtung (1) umfasst, dessen Betätigung durch den Benutzer ermöglicht, dass die elektronische Steuereinheit (3) elektrisch mit der Leistungsversorgungseinheit (6) verbunden wird.

11. Vorrichtung (1) nach einem der vorhergehenden Ansprüche, die ferner einen Befehl (13) zum Freigeben der Informationssignalisierungseinheit (5) umfasst, deren Betätigung durch den Benutzer ermöglicht, dass die Informationssignalisierungseinheit (5) elektrisch mit der Leistungsversorgungseinheit (6) verbunden wird.

12. Vorrichtung (1) nach einem der vorhergehenden Ansprüche, wobei die Sensoreinheit (4), die Informationssignalisierungseinheit (5), die Leistungsversorgungseinheit (6) und elektrische Verbindungen davon so flexibel sind wie das flexible Trägersubstrat (2) und die elektronische Steuereinheit (3).

13. Vorrichtung (1) nach einem der vorhergehenden Ansprüche 10 bis 12, wobei der Aktivierungsbefehl (12) und der Freigabebefehl (13) flexibel sind.

14. Vorrichtung (1) nach einem der vorhergehenden Ansprüche, wobei eine solche Vorrichtung (1) mit einer Kapselungsschicht abgeschlossen ist, die dazu ausgelegt ist, die Permeation bestimmter Dämpfe oder Gase zu begrenzen oder zu verhindern.

15. Vorrichtung (1) nach einem der abhängigen Ansprüche, wobei eine hintere Oberfläche des flexiblen Trägersubstrats (2) als Ganzes oder teilweise mit einer Klebstoffschicht beschichtet ist, um die Haftung an der oder den beabsichtigten Oberflächen der Verpackung (100) zu ermöglichen.

## Revendications

1. Dispositif (1) d'étiquette intelligente pouvant être appliqué sur un emballage (100) pour fournir une information représentant la durée de vie résiduelle d'un produit périssable à l'intérieur de l'emballage (100), comprenant :
- un substrat de support flexible (2) composé de polymères et/ou de matières plastiques et/ou de matières organiques et/ou de matières flexibles ;
- une unité de commande électronique (3) associée au substrat de support flexible (2),
- une unité de capteurs (4) associée au substrat de support flexible (2), l'unité de capteurs (4) étant reliée fonctionnellement à l'unité de commande électronique (3), l'unité de capteurs (4) détectant des données relatives à la périssabilité du produit périssable à l'intérieur de l'emballage (100) auquel le dispositif (1) est associé ;
- une unité de signalisation d'informations (5) associée au substrat de support flexible (2), l'unité de signalisation d'informations (5) étant reliée fonctionnellement à l'unité de commande électronique (3),
- une unité d'alimentation électrique (6) associée au substrat de support flexible (2), l'unité d'alimentation électrique (6) étant reliée fonctionnellement à l'unité de commande électronique (3),
l'unité de commande électronique (3)
- déterminant une information représentant la durée de vie résiduelle d'un produit périssable à l'intérieur d'un emballage (100) auquel le dispositif (1) est associé, sur la base de données relatives à la périssabilité du produit périssable fournies par l'unité de capteurs (4) ;
- et fournissant à l'unité de signalisation d'informations (5) l'information déterminée représentant la durée de vie résiduelle d'un produit périssable (100), **caractérisé en ce que** l'unité de commande électronique (3) est un circuit intégré flexible comprenant des éléments électroniques comprenant un matériau semiconducteur organique déposé sur le substrat de support flexible (2) à partir d'une phase liquide au moyen de techniques d'impression ou comprenant un matériau semiconducteur à base d'oxydes métalliques.

2. Dispositif (1) selon la revendication 1, dans lequel l'unité de commande électronique (3) est configurée pour :
- associer les données détectées par l'unité de capteurs (4) à des combinaisons définies de paramètres et de profils temporels ;
- déterminer, en fonction de ces informations agrégées, une information représentant l'état de détérioration du produit périssable et mettre à jour l'information représentant la durée de vie résiduelle du produit périssable, à l'aide d'algorithmes définis basés sur des modèles spécifiques de détérioration pour le produit périssable à surveiller en fonction des données relatives à la périssabilité du produit périssable fournies par l'unité de capteurs (4).

3. Dispositif (1) selon l'une quelconque des revendications 1 ou 2 précédentes, dans lequel l'information représentant la durée de vie résiduelle d'un produit périssable est une information représentant une date à laquelle le produit se sera détérioré, l'unité de commande électronique (3) étant configurée pour affecter la valeur de la durée de vie résiduelle déterminée à cette information.

4. Dispositif (1) selon l'une quelconque des revendications 1 ou 2 précédentes, dans lequel l'information représentant la durée de vie résiduelle d'un produit périssable est une indication d'un état de détérioration du produit périssable, l'unité de commande électronique (3) étant configurée pour déterminer cette information en comparant la durée de vie résiduelle déterminée à une valeur seuil d'alarme correspondant à une durée de vie résiduelle minimale.

5. Dispositif (1) selon l'une quelconque des revendications précédentes, dans lequel l'unité de commande électronique (3) est configurée en outre pour déterminer une information représentant l'interaction de l'utilisateur sur l'emballage, sur la base de données respectives fournies par l'unité de capteurs (4) représentant l'interaction de l'utilisateur avec l'emballage sur lequel le dispositif (1) est appliqué.

6. Dispositif (1) selon l'une quelconque des revendications précédentes, dans lequel l'unité de signalisation d'informations (5) est configurée pour fournir à l'utilisateur l'information représentant la durée de vie résiduelle du produit périssable à l'intérieur de l'emballage (100).

7. Dispositif (1) selon l'une quelconque des revendications précédentes, dans lequel l'unité de signalisation d'informations (5) comprend une unité d'affichage.

8. Dispositif (1) selon l'une quelconque des revendications précédentes, dans lequel l'unité de signalisation d'informations (5) comprend au moins un dispositif de déclenchement d'un mouvement mécanique ou au moins un dispositif émetteur de sons.

9. Dispositif (1) selon l'une quelconque des revendications 6 à 8, dans lequel la signalisation de l'information représentant la durée de vie résiduelle du produit périssable à l'intérieur de l'emballage (100) s'effectue en continu ou de manière répétée à intervalles constants ou s'effectue à l'issue d'événements définis ou à la demande de l'utilisateur.

10. Dispositif (1) selon l'une quelconque des revendications précédentes, comprenant une commande (12) d'activation électrique du dispositif (1), dont l'actionnement, par l'utilisateur, permet de connecter électriquement l'unité de commande électronique (3) à l'unité d'alimentation électrique (6).

11. Dispositif (1) selon l'une quelconque des revendications précédentes, comprenant en outre une commande (13) de mise en fonctionnement de l'unité de signalisation d'informations (5), dont l'actionnement, par l'utilisateur, permet de connecter électriquement l'unité de signalisation d'informations (5) à l'unité d'alimentation électrique (6).

12. Dispositif (1) selon l'une quelconque des revendications précédentes, dans lequel l'unité de capteurs (4), l'unité de signalisation d'informations (5), l'unité d'alimentation électrique (6) et leurs interconnexions électriques sont aussi flexibles que le substrat de support flexible (2) et l'unité de commande électronique (3).

13. Dispositif (1) selon l'une quelconque des revendications précédentes 10 à 12, dans lequel la commande d'activation (12) et la commande de mise en fonctionnement (13) sont flexibles.

14. Dispositif (1) selon l'une quelconque des revendications précédentes, un tel dispositif (1) étant complété par une couche d'encapsulation adaptée à limiter ou empêcher la perméation de vapeurs ou gaz spécifiques.

15. Dispositif (1) selon l'une quelconque des revendications dépendantes, dans lequel une surface arrière du substrat de support flexible (2), en totalité ou en partie, est revêtue d'une couche adhésive pour permettre l'adhérence à la ou aux surfaces visées de l'emballage (100).
